# EUROPEAN PATENT APPLICATION

(11) **EP 2 120 199 A2**
(43) Date of publication of application: **18.11.2009**
(21) Application number: 09380065.4
(22) Date of filing: 31.03.2009
(51) Int. Cl.: G06Q 20/00

(54) **Method of authorising a transaction between a computer and a remote server and communications system, with improved security**

(30) Priority: 14.04.2008 ES 200801059
(71) Applicant: Avenida Diagonal 477, S.L., 08036 Barcelona (ES)
(72) Inventor: Olivares Baena, Bartolomé, 08970 Sant Joan Despi (Barcelona) (ES)
(74) Representative: Durán Moya, Luis-Alfonso

(57) **Abstract**

Method of authorising a transaction between a computer and a remote server and communications system.

The method comprises the following steps:
connecting a portable card reader to a computer;
reading of the card data by the portable card reader;
reading of an identification code from a separate RFID tag by means of a reading unit situated in the card reader;
sending at least one item of sensitive card identification data and the identification code to a server;
searching for the item of sensitive identification data - unique code set in an electronic memory of the management server, and also the identification code - unique code set or the identification code - item of sensitive data set;
if the above searches do not produce positive results, generation of an instruction denying said transaction.

## Description

The present invention relates to a method for authorising a transaction between a computer and a remote server, together with a system for sending sensitive information contained in readable cards by Internet.

Typically, the sensitive information may refer to personal data, such as, for example, identification data, personal medical data, banking data or any kind of data. Said data must be protected from attempts to steal information by different security techniques: data encryption, interactive user and/or hardware validation methods, etc.

However, when the communications network used is an Internet-type network, the techniques and technologies known to date do not resolve satisfactorily the problem of achieving a level of security similar to that in the "real" world. For example, in the specific case of credit cards, in the real world the following security means exist:
- The banking data are contained on a readable card, such as a card with a magnetic strip or chip.
- The user identifies himself as the owner of the card to the owner of the payment terminal.
- An identification number (PIN) is transmitted to a sensitive data management server to authenticate the owner up to the server, together with the card identification number (PAN). The data are transmitted by the telephone network or other communications network.
- Finally, the owner signs an authorisation of the monetary transaction performed.

However, when the transmission is by Internet, via web interfaces, it is impossible to achieve this level of security. In fact, whatever the authorisation or encryption method used, an individual who obtains the sensitive information in question (for example, the card number (PAN) and, if applicable, the personal identification number (PIN)) may force a transaction against the wishes of the legitimate user of the card. Obtaining said data is relatively easy, for example, if the card is stolen or lost.

The Spanish patent application no. 200702670 by the present applicant discloses a method and a communications system for performing said method which achieves levels of security similar to those present in transactions carried out by means of communications systems other than the Internet.

More particularly, said patent application consists of a method of authorising a transaction between a computer and a remote server connected via a remote communications network, **characterised in that** it comprises the following steps:
- connecting a portable card reader to a computer by means of a standard communications port;
- reading the card data by means of the portable card reader;
- sending at least one item of sensitive card identification data to a server for managing sensitive data contained in readable cards via a communications network to which the computer is connected;
- searching in the electronic memory of the management server for the data set sent;
- if the above search does not return any positive data, generation by the management server of an instruction to deny said transaction.

Said method may be carried out by a system for sending sensitive information contained on a readable card via Internet-type networks, **characterised in that** the system comprises:
- a computer with a connection to a remote communications network;
- a remote server connected to said computer via the remote communications network;
- a server for controlling sensitive data contained in readable cards;
such that the system requests sensitive information contained on the readable card to authorise a transaction between the computer and the remote server, said authorisation being issued by the management server according to an authorisation procedure;
the system also comprising:
- a portable card reader connected to the computer via a standard communications port;
in which the following relations between the different elements of the system are established:
- reading of the card data by the reader;
- transmission of at least one item of sensitive card identification data, read by the reader, to the management server via a communications network;
- generation by the management server of an instruction to deny or authorise the authorisation.

This method and system are advantageous in that they can achieve an improved level of security, in different ways. In fact, the portable card reader, which can be connected to any computer by means of a standard communications port may "replace" the card owner in the proposed communications system. Thus, the sensitive data are not input via the computer keyboard (a point through which the security of the communication may be compromised) but are read by a reader which need not be a fixed part of the computer that establishes the connection, which improves security. Being portable, since it can be connected by a standard port, the reader can be taken from one computer to another by the card owner.

However, any security system can be compromised in one way or another, and it is therefore desirable to increase security. Nevertheless, security systems generally tend to reduce the versatility and convenience of applications.

The object of the present invention is to disclose a method and a system, based on the system and method described above, with improved anti-theft security and, at the same time, greater versatility.

More precisely, the present invention comprises a method like the one described above, in which the following steps are included:
- reading an RFID identification code from a separate RFID tag by a radio-frequency identification reading unit (RFID) situated in the portable card reader;
- sending the read identification code to said data management server;
- searching for the unique code - RFID identification code set, or the item of sensitive data - RFID identification code set;
- if the above search does not produce any positive data, generation by the management server of an instruction denying said transaction.

In a preferred embodiment, the search is carried out on the item of sensitive data - RFID identification code set, the RFID number and the credit card being connected. Alternatively, so as not to restrict consumption, the RFID number and the reader number may be connected. In this case, the search may be performed on the RFID identification code - unique code set.

Moreover, the present invention also comprises a system as described above, **characterised in that** it also comprises:
- a separate RFID tag;
- an RFID reader integrated in the portable card reader,
and in which the following relations are also established between the different elements of the system:
- reading of an RFID identification code contained in the RFID tag,
- transmission of said RFID identification code to the management server via the communications network.

According to the present invention security is increased by means of the RFID code of the RFID tag. In addition, since it is a separate RFID tag, it has the advantage of accompanying the user and performing its function without needing to be shown in order to make payment owing to the remote reading made possible by the RFID technology.

The RFID tag may be in a form integrated with the system, such as a key, for example, or even more advantageously, it may be integrated in an object of different functionality from the rest of the system components.

Preferably, to increase security, said reader has a memory with a unique code associated with the reader and in that in said transmission phase the unique code is transmitted together with the item or items of sensitive card data.

Preferably, said reader has a memory with a unique code associated with the reader and in that in said transmission phase the unique code is transmitted together with the item or items of sensitive card data.

Even more preferably, the system searches for the item of sensitive identification data - unique code set in an electronic memory of the management server, said management server generating an instruction denying authorisation if the above search does not return a positive result.

Preferably, the reader has a chip for encrypted communication with the management server.

For a better understanding of the invention, the accompanying drawings show embodiments of the present invention by way of explanatory but not limiting example.
Fig. 1 shows a diagram of a card reader belonging to a system according to the invention, which performs a method according to the present invention.
Fig. 2 is a diagram of the elements of a system according to the present invention, seen by the user.
Fig. 3 is a diagram of the different elements of a system according to the present invention, which performs a method according to the present invention.

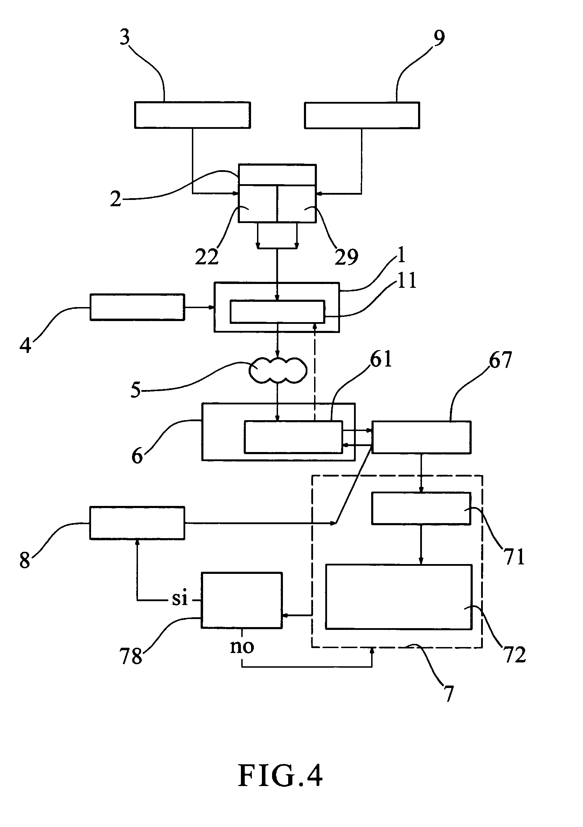

Fig. 4 is a block diagram showing the relations between the different elements of the system of the present invention.

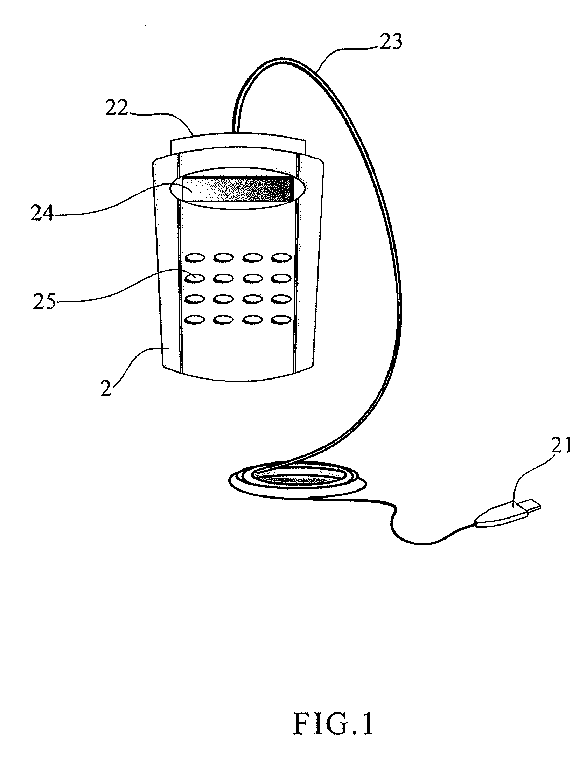

Fig. 1 shows a card reader 2 which forms part of a communications system according to the present invention. As can be seen in the figure, the card reader 2 which has been shown is portable and has a screen 24, a numeric keyboard 25 and a card reading slot 22. Characteristically, the reader 2 has a standard port connector 21 (for example, USB) connected to the reader by a communications cable 23 (for example, USB). The connector 21 allows the reader 2 to be connected to any computer, such that the card data are not input by keyboard, but read by the reader 2, which provides greater security, as it is possible to check, for example, the connection of the reader to the computer before issuing, for example, a payment authorisation.

Further, the card reader 2 has an integrated RFID reader 29 capable of reading remotely an identification code contained in an RFID tag 9. The RFID technology allows tags to be read from tens of metres distance, and it is therefore possible for the RFID tag 9 to be integrated in an object that has a different purpose from that of the rest of the system. For example, it may be in the form of a key ring or house key, as shown in the figure. This allows the tag to be unobtrusive, practical, convenient to carry and secure. Alternatively, it is also possible to give it the form of a specific key and place a reception area for said specific key in the reader 2, for example. Although not shown in the figures, internally the reader 2 may have a memory containing a unique code associated with the reader. This will also allow the presence of the card owner to be validated at the terminal connected to an Internet network, so that it will not be possible to make fraudulent payments simply by stealing the card.

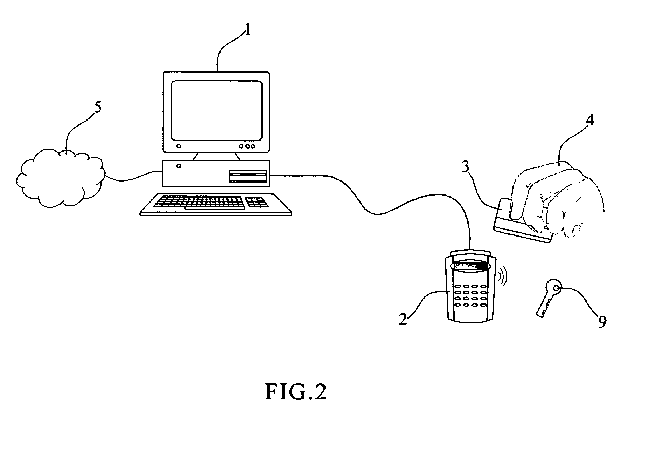

In Fig. 2 a computer 1 is shown connected to an Internet network 5 to which has been connected a reader 2 through the reading slot of which the user 4 passes a card 3 which has sensitive data (for example, an identification card, a health card or a credit card). The RFID reader 29 also reads an RFID identification code from the RFID tag 9.

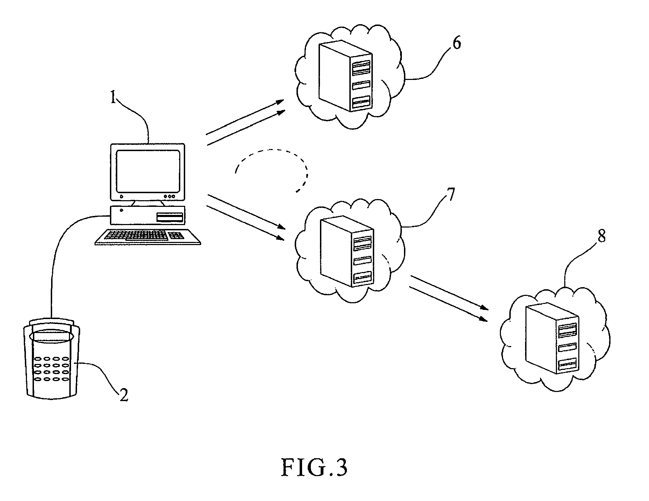

Fig. 3 shows elements of a system according to the present invention. In said diagram, it can be seen that the computer 1, to which a card reader 2 has been connected is connected via a remote communications network (typically the Internet) to a remote server 6. A transaction is set up between the computer 1 which must be authorised. The transaction may be an order, or any kind of information transmission, for example. The validation data are the data contained in a readable card, and authorisation may be given, typically, by an authorisation server 8 (for example, in the case of credit cards, a server of a credit entity). According to the present invention, there is a server 7 controlling sensitive data contained in readable cards, which provides authorisation of the transaction. In the case of credit cards, the management server 7 may be the same as the authorisation server 8, or it may be a different one.

In operation, for authorisation of the transaction established between the computer 1 and the remote server 6, the reader 2 reads an item of sensitive card data by means of the reader 22 (for example, a "smart card" reader) and also reads an RFID identification code from the RFID tag or "ekey" by means of the RFID reading device 29. These data are sent via the computer 1 and the remote communications network 5 to the management server 7, which gives authorisation directly or after consulting the authorisation server 8, as applicable. The connection between the management server 7 and the reader 2 may occur with or without the intermediary of the remote server 6. If the data pass through the server 6, it is extremely important for security to maintain the confidentiality of these data. Accordingly, it is preferable for the reader to have a chip for encrypted communication with the server. Additionally or alternatively, the computer 1 has a data management application for the reader 11 ("stand alone") which is related to another related application -61- of the server 6, which is responsible for carrying out the secure communications method between the computer 1, the server 6 and the management server -7- ("application server").

Therefore preferably, the applications 61, 11 should be controlled by and/or related to the management server 7.

In the case shown, the data read by the reader 2 are processed by the "stand alone" application 11 which configures the computer 1, and sent via the Internet 5 to the server 6. The transmission used should be a secure communications procedure, for example, based on an SSL protocol. The server application 61 is put in contact via a proxy server 67 with the management server 7 sending it the agreed data for authorisation.

As well as the data from the card 2 and from the tag 9, a unique code which identifies the reader 2 may also be sent to the management server 7. Preferably, the management server 7 takes the data, for example via an application server 71, and searches in a special electronic memory 72, for example via a search engine 78 of the application server 71, for the RFID identification data pair and the unique code of the reader, discharging the transaction only if the search returns a positive result. Discharge may be carried out directly, or via an authorisation server 8, to which at least the information from the card 3 is sent. The authorisation server 8- accepts or denies the transaction, for example, by sending an authorisation notice to the proxy server 67 of the server 6.

The memory 72 of the management server 7, for example, contains all the serial numbers of all available readers with the associated RFID numbers, preferably, the same unique reader RFID. Thus, each reader and RFID tag thereof are related in a database contained in the memory 72.

In addition, to authorise the transaction, a search may be made for the data set unique code - item of sensitive data, similar to the one just described for the unique code - RFID identification code set. Said search may be performed by the authorisation server 8, and authorisation will depend on a positive result from one or, more preferably, both searches.

In this way the reader 2 is related to the RFID tag 9, and, alternatively, to the card 3, so that to illegally substitute a user 4, it is necessary to steal or forge the card 3 (and not just the PAN thereof) of the reader 2, and also as many security numbers (for example PIN, VAN) as may be wished to establish. The RFID must also be replaced, but this cannot pass unnoticed by the person defrauded since the RFID is read remotely without the user needing to take out and show the RFID tag.

In a particularly preferred embodiment, the reader has a chip for exchanging data between the reader and the management server. Said communication may be encrypted, in other words the management server is the only one authorised to access particular data from the reader.

The present invention discloses novel technical means which provide a level of security for cards in Internet networks similar to that when used outside said field, with the expectation of revolutionary results produced when making sales via said medium.

Although the invention has been described with regard to preferred embodiments, these should not be considered as limiting the invention, which should be defined by the widest interpretation of the following claims.

## Claims

1. Method of authorising a transaction between a computer and a remote server connected via a remote communications network, which comprises the following steps:
- connecting a portable card reader to the computer by means of a standard communications port;
- reading of the card data by the portable card reader;
- sending of at least one item of sensitive card identification data to a server for managing sensitive data contained in readable cards via a communications network to which the computer is connected;
- searching for the unique set of sent data in an electronic memory of the management server;
if the above search does not produce any positive data, generation by the management server of an instruction denying said transaction; **characterised in that** the method includes the following steps:
- reading by a radiofrequency identification reading unit (RFID) situated in the portable card reader, of an RFID identification code from a separate RFID tag;
- sending the read identification code to said data management server;
- searching for the unique code - RFID identification code set, or the item of sensitive data - RFID identification code set;
- if the above search does not produce any positive data, generation by the management server of an instruction denying said transaction.

2. Method according to claim 1, **characterised in that** the search is performed on the item of sensitive data - RFID identification code set.

3. Method according to claim 2, **characterised in that** it comprises a phase of reading a unique code placed in a memory of said reader and **in that** in said transmission phase the item or items of sensitive card data are transmitted together with the unique code and the RFID identification code.

4. Method according to claim 3, **characterised in that** the management server generates an instruction denying authorisation if any of the searches does not return a positive result.

5. Method according to any one of claims 1 to 4, **characterised in that** the communication between the reader and the management server is established without the intermediary of the remote server.

6. Method according to claim 5, **characterised in that** said communication is encrypted.

7. System for sending sensitive information contained in a readable card by Internet-type networks, which comprises:
- a computer with a connection to a remote communications network,
- a remote server connected to said computer via the remote communications network,
- a server for managing sensitive data contained in readable cards;
the system being configured in such a way that it requests sensitive information contained in the readable card for authorisation of a transaction between the computer and the remote server, said authorisation being issued by the management server according to an authorisation procedure;
the system comprising a portable card reader connected to the computer by means of a standard communications port;
in which the following relations are established between the different elements of the system;
- reading of the card data by the reader;
- transmission of at least one item of sensitive card identification data, read by the reader, to the management server via a communications network;
- generation by the management server of an instruction denying or authorising the authorisation; **characterised in that** the system also comprises
- a separate RFID tag;
- an RFID reader integrated in the portable card reader,
and **in that** the following relations are also established between the different elements of the system:
- reading of an RFID identification code, contained in the RFID tag,
- transmission of said RFID identification code to the management server via the communications network.

8. System according to claim 7, **characterised in that** said reader has a memory with a unique code associated with the reader and **in that** in said transmission phase the unique code is transmitted together with the item or items of sensitive card data and with the RFID identification code.

9. System according to claim 8, **characterised in that** the system searches for the RFID identification code - unique code set, or for the RFID identification code - unique code set in an electronic memory of the management server, said management server generating an instruction denying authorisation if the above search does not return a positive result.

10. System according to any one of claims 6 to 9, **characterised in that** the reader has a chip for encrypted communication with the management server.

11. System according to any one of claims 6 to 10, **characterised in that** the separate RFID tag is integrated in an object of different functionality from that of the rest of the system components.
